# EUROPÄISCHE PATENTSCHRIFT

(11) **EP 1 740 488 B1**
(45) Veröffentlichungstag und Bekanntmachung des Hinweises auf die Patenterteilung: **06.08.2008**
(21) Anmeldenummer: 05716624.1
(22) Anmeldetag: 04.02.2005
(51) Int. Cl.: B65H 5/16

(54) **TEMPERATURÜBERWACHUNG EINER LAUFROLLE IN EINER MASCHINE**
TEMPERATURE MONITORING OF A ROLLER IN A MACHINE
CONTROLE DE LA TEMPERATURE D'UN ROULEAU DANS UNE MACHINE

(30) Priorität: 26.04.2004 DE 102004020302
(43) Veröffentlichungstag der Anmeldung: 10.01.2007
(73) Patentinhaber: Koenig & Bauer AG, 97080 Würzburg (DE)
(72) Erfinder: HAMPL, Helmut, 67454 Hassloch (DE); PRÜM, Sebastian, Alois, 67657 Kaiserslautern (DE)
(86) Internationale Anmeldenummer: PCT/EP2005/050481
(87) Internationale Veröffentlichungsnummer: WO 2005/101951

(56) Entgegenhaltungen:
- EP-A- 1 053 870
- DE-A1- 1 945 343
- DE-A1- 3 904 122
- DE-A1- 4 442 154
- US-A- 5 019 692

## Beschreibung

Die Erfindung betrifft eine Maschine mit einem rotierbaren Zylinder mit mindestens einem Werkzeug gemäß dem Oberbegriff des Anspruchs 1.

Bei der Herstellung von Druckerzeugnissen aus Papierbahnen gibt es unzählige Prozessschritte, bei denen Papier zerschnitten, durchstochen oder anderweitig zerteilt wird. Dabei entsteht unweigerlich Papierstaub, der sich innerhalb einer Werkhalle auf den Einrichtungen eines Druckereibetriebes absetzt. Gleichzeitig werden aus Lagern von Druck- oder anderen Maschinen austretende Getriebe- und Schmieröle mikroskopisch fein zerstäubt und durch Luftverwirbelungen innerhalb der Werkhalle verteilt. Diese mikroskopischen Tröpfchen setzen sich so wie der Papierstaub auch auf den verschiedenen Einrichtungen innerhalb der Werkhalle ab. Es bildet sich ein sehr leicht entzündliches Gemisch aus Papierstaub und Öl, das größten teils auf der Laufrolle und der Scheibe des Falzapparates bzw. in dessen näherer Umgebung anzutreffen ist.

Da die Laufrollen mit bis zu 7.000 bis 7.500 U/min recht schnell rotieren, ist ein Verschleiß der die Scheibe abtastenden Laufrolle entsprechend hoch, so dass es recht oft zu Beschädigungen der Laufrolle oder eines Lagers der Laufrolle kommt. Eine beschädigte Laufrolle oder Lager wiederum führt bei diesen hohen Drehgeschwindigkeiten des Zylinders zu erheblichen Reibungskräften zwischen der Laufrolle und der Scheibe bzw. im Lager, so dass es innerhalb von wenigen Sekunden zu schnellen Temperaturanstiegen der Laufrolle auf Temperaturen kommt, die leicht einen Flammpunkt des Papierstaub-Öl-Gemisches übertreffen. Das Gemisch wird dadurch sehr leicht entzündet. Bei schwereren Schäden der Laufrolle kommt es sogar zu einem Funkenschlag, der das leicht entflammbare Gemisch sofort in Brand setzen kann. Immer wieder kommt es daher in Druckereien zu schweren oder schwersten Bränden, die durch das Papierstaub-Öl-Gemisch und defekte Laufrollen oder Lager verursacht werden.

Die US 5 141 333 A beschreibt eine Vorrichtung zur Ermittlung der Temperatur einer drehenden, geheizten Tonerwalze.

Die DE 44 42 154 A1 offenbart ein Verfahren zum Einleiten eines vorzeitigen Rollenwechsels, bei dem eine stirnseitig durchgeführte berührungslose Temperaturmessung der Rolle vorgesehen ist.

Durch die DE 37 34 018 A ist eine Vorrichtung zur Messung der Temperatur der Oberfläche einer umlaufenden Walze bekannt. Dabei wird die abgestrahlte Energie von einem Strahlungspyrometer erfasst.

Die US 5 019 692 A und die DE 39 04 122 A1 beschreiben Temperaturmessungen an Rotationskörpern.

Die DE 19 45 343 A1 behandelt die Kühlung und Temperaturerfassung des Läufers eines elektrischen Motors.

Die DE 38 28 372 A1 offenbart einen Falzapparat mit einem Sammelzylinder. Auf dem Sammelzylinder angeordnete Werkzeuge werden über Laufrollen und Kurvenscheiben gesteuert.

Der Erfindung liegt die Aufgabe zugrunde, eine Maschine mit einem rotierbaren Zylinder mit mindestens einem Werkzeug zu schaffen.

Die Aufgabe wird erfindungsgemäß durch die Merkmale des Anspruchs 1 gelöst.

Bei der erfindungsgemäßen Maschine kann mit dem Temperatursensor die Temperatur der Laufrolle überwacht werden. Sofern ein Anwachsen der Temperatur registriert wird, kann eine kritische Überhitzung vermieden werden, indem die Maschine beispielsweise abgeschaltet wird.

Der Temperatursensor kann in direktem thermischem Kontakt mit der Laufrolle oder einem Lager der Laufrolle angeordnet sein. Da ein solcher Sensor zusammen mit der Laufrolle umlaufen muss, ist es jedoch recht aufwändig, die von dem Sensor gewonnenen Messergebnisse zu einer stationären Auswerteeinheit abzuleiten. Bevorzugt wird daher ein berührungsloser Temperatursensor wie z. B. ein Infrarotpyrometer eingesetzt.

Ein solcher berührungsloser Temperatursensor kann in Bezug auf ein Maschinengestell, in dem der Zylinder drehbar aufgehängt ist, ortsfest montiert sein und die Temperatur der Laufrolle immer dann messen, wenn die Laufrolle einen Erfassungsbereich des Sensors passiert. Eine solche Ausführung ist gegenüber der Ausführung mit mitlaufendem Temperatursensor erheblich einfacher ausgeführt und kostengünstiger, weil ein einziger Sensor eine Vielzahl von Laufrollen überwachen kann und ein Messsignalabführung von einem stationären Temperatursensor unproblematisch abzuführen ist. Zudem sind stationäre Temperatursensoren einfach und bequem auch zur Nachrüstung in bereits vorhandene Maschinen einbaubar.

Bei einer bevorzugten Ausgestaltung umfasst die Maschine eine Auswerteeinheit, welche die vom Temperatursensor erfasste Temperatur mit einem vorgegebenen Grenzwert vergleicht und den Zylinder stoppt, sobald die Temperatur den Grenzwert übersteigt.

Sofern die Maschine n Laufrollen aufweist, wobei n ≥ 2 ist, die in jeder Umdrehungsperiode T des Zylinders einen Erfassungsbereich des Temperatursensors passieren, so erfasst der Temperatursensor dabei jeweils die Temperatur der Laufrollen und erzeugt ein Temperatursignal, das eine niederfrequente spektrale Komponente bei der Frequenz 1/T und eine hochfrequente Komponente bei der Frequenz n/T enthält. Bei dieser Ausgestaltung der Maschine kann die Auswerteeinheit die Intensität der niederfrequenten spektralen Komponente oder das Verhältnis dieser Intensität zu der Intensität der hochfrequenten spektralen Komponente mit einem vorgegebenen Grenzwert vergleichen. Die Auswerteeinheit stoppt den Zylinder, sobald die Intensität bzw. das Verhältnis den Grenzwert übersteigt.

In einer weitergehenden Ausgestaltung der Maschine umfasst die Maschine ferner einen Signalgeber, über den die Auswerteeinheit ein akustisches und/oder ein optisches Warnsignal ausgibt, sobald die Temperatur bzw. die Intensität bzw. das Verhältnis den Grenzwert übersteigt. Dadurch lassen sich zuständige Personen auf den Eintritt des Schadens aufmerksam machen. Bei dem Signalgeber kann es sich beispielsweise um eine Hupe oder Sirene handeln. Er kann aber auch eine Warnlampe oder ein Blinklicht sein. Auch ein Bildschirm oder eine Anzeigetafel, die eine Fehlermeldung anzeigen, eignen sich als Signalgeber. Es können auch mehrere Signalgeber vorgesehen sein, die z. B. sowohl ein optisches als auch ein akustisches Warnsignal ausgeben. Beispielsweise kann das akustische Warnsignal dazu dienen, die Aufmerksamkeit von Personen zu erregen, während ein parallel dazu erfolgendes optisches Warnsignal, wie eine auf einem Bildschirm angezeigte Fehlermeldung, über die Ursache des akustischen Warnsignals informiert.

Die Auswerteeinheit ist zweckmäßigerweise in einen Leitstand der Maschine integriert. Der Leitstand kann auch den Signalgeber umfassen. Beispielsweise kann der Signalgeber ein Computerbildschirm sein, auf dem die Auswerteeinheit neben dem optischen Warnsignal die vom Temperatursensor erfasste Temperatur anzeigt. Ebenso ist es möglich, dass die Auswerteeinheit aus einer relativen Phasenlage der 1/T-Komponente des Temperatursignals zur Drehung des Zylinders ermittelt, welche von n Laufrollen defekt ist und dies am Signalgeber anzeigt.

Der Zylinder umfasst wenigstens ein Werkzeug, das in der Lage ist, eine Arbeitsbewegung in Bezug auf den Zylinder auszuführen, und das an wenigstens einen die Laufrolle tragenden Steuerhebel zum Antreiben der Arbeitsbewegung anhand der Kontur der von der Laufrolle abgetasteten Scheibe gekoppelt ist. Üblicherweise wird die Scheibe als Kurvenscheibe bezeichnet, wenn sie in Bezug auf ein Maschinengestell, in dem der Zylinder drehbar aufgehängt ist, ortsfest ist.

Neben der Kurvenscheibe ist bevorzugterweise eine zweite Scheibe, auch Deckscheibe genannt, in der Maschine vorgesehen. In einer Ausführung der Maschine trägt der Steuerhebel eine zweite Laufrolle zum Abtasten dieser zweiten Scheibe. In einer dazu alternativen Ausführung ist dagegen ein zweiter Steuerhebel mit einer zweiten, die zweite Scheibe abtastenden Laufrolle vorhanden, wobei der Steuerhebel mit der die Kurvenscheibe abtastenden Laufrolle und der zweite Steuerhebel gekoppelt um eine gemeinsame Achse schwenkbar sind, um die Bewegung des ihnen zugeordneten Werkzeugs zu steuern. Die Kontur der zweiten Scheibe oder Deckscheibe bestimmt, ob das Werkzeug eine durch die Kontur der gleichzeitig abgetasteten Kurvenscheibe programmierte Arbeitsbewegung ausführt oder nicht. Die Deckscheibe ist um die Achse des Zylinders, eventuell mit einer anderen Winkelgeschwindigkeit als dieser, drehbar.
Eine derartige Anordnung ist beispielsweise in der DE 38 28 372 A1 für einen Punktur- und Falzmesserzylinder gezeigt.

Wenn ein einziger Temperatursensor zwei verschiedene Scheiben abtastende Laufrollen sieht, erfasst er nur eine gemittelte Temperatur von beiden Laufrollen. Dies vermindert die Empfindlichkeit des Temperatursensors. Sofern die Maschine Laufrollen aufweist, die zwei verschiedene Scheiben abtasten, werden daher besonders bevorzugt wenigstens zwei Temperatursensoren eingesetzt, wobei ein erster der Temperatursensoren die Temperatur der die Kurvenscheibe abtastenden Laufrolle(n) erfasst und ein zweiter der Temperatursensoren die Temperatur der die Deckscheibe abtastenden Laufrolle(n) erfasst.

Das Werkzeug, dessen Arbeitsbewegung von den Scheiben, Laufrollen und Steuerhebeln angetrieben wird, kann beliebig sein. Vorzugsweise handelt es sich bei dem Werkzeug aber um einen Greifer oder eine Punkturleiste oder ein Falzmesser oder eine Falzklappe. Dabei ist es möglich, dass der Zylinder mehrere unterschiedliche Werkzeuge aufweist, z. B. im Falle eines Punktur- und Falzmesserzylinders, der sowohl Punkturleisten als auch Falzmesser als Werkzeuge hat.

Bei der Maschine handelt es sich bevorzugt um einen Falzapparat insbesondere in einer Druckmaschine oder eine Bogendruckmaschine (Greiferstellung der bogentransportierenden Zylinder).

Ein Ausführungsbeispiel der Erfindung ist in den Zeichnungen dargestellt und wird im Folgenden näher beschrieben.

Es zeigen:
- Fig. 1: eine perspektivische Teilansicht eines Zylinders;
- Fig. 2: eine auseinander gezogene Detailansicht der Steuereinrichtung mit zwei Steuerhebeln eines Falzmessers des Zylinders aus Fig. 1;
- Fig. 3: eine Detailansicht einer vereinfachten Steuereinrichtung mit einem Steuerhebel und zwei daran montierten Laufrollen;
- Fig. 4: eine schematisierte Darstellung der Vorderansicht der Steuereinrichtung;
- Fig. 5: ein erstes von einem der Temperatursensoren geliefertes Signal;
- Fig. 6: ein zweites von einem der Temperatursensoren geliefertes Signal.

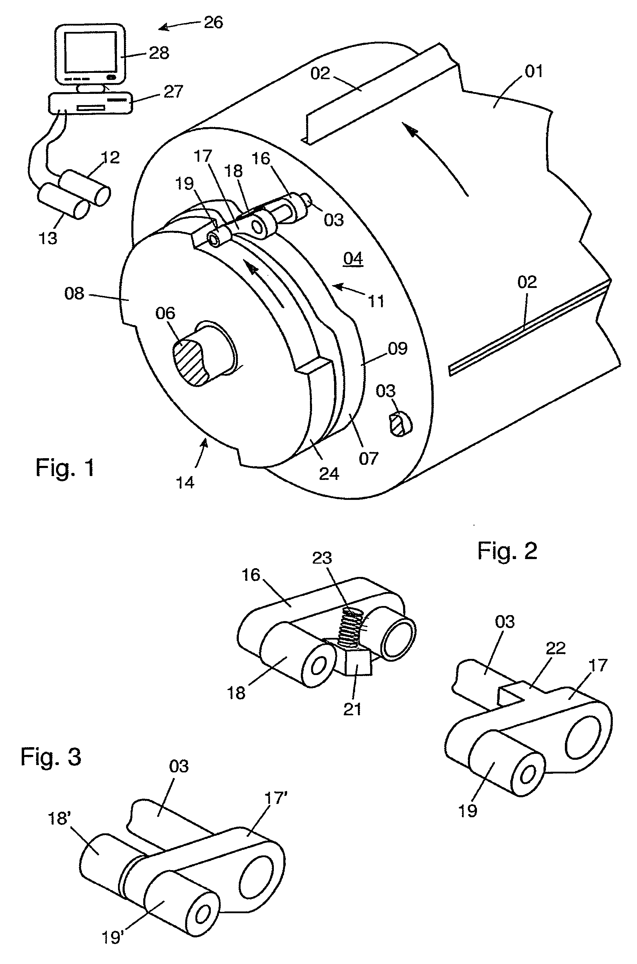

Fig. 1 zeigt beispielhaft einen Endabschnitt eines drehbar in einem nicht gezeigten Seitengestell einer Maschine gelagerten Zylinders 01 mit drei Werkzeugen 02, z. B. Falzmessern 02, die aus jeweils in einem Abstand von 120° ander Mantelfläche des Zylinders 01 angeordneten Schlitzen ausfahrbar sind (in Fig. 1 nur zwei sichtbar). Der Zylinder 01 trägt ferner drei hier nicht dargestellte Punkturleisten oder Greifer, die zum Festhalten einer zugeführten Signatur am Zylinder 01 dienen. Der Abstand der Greifer von den Falzmessern 02 ist einstellbar. Eine auf die Mantelfläche des Zylinders 01 geladene, von den Punkturleisten oder Greifern gehaltene Signatur durchläuft im Verlauf der Drehung des Zylinders 01 einen Übergabespalt zwischen dem Zylinder 01 und einem nicht dargestellten Falzklappenzylinder. Am Übergabespalt fahren die Falzmesser 02 aus, wodurch die Signatur in eine Falzklappe der Falzklappenzylinders hineingedrückt und dabei mittig quergefalzt wird. Während die Signatur in der Falzklappe eingeklemmt wird, geben die Punkturleiste oder die Greifer des Zylinders 01 die Signatur frei, um die Übergabe an den Falzklappenzylinder zu vollenden.

Um nach der Übergabe eine nachfolgende Signatur auf die Mantelfläche des Zylinders 01 laden zu können, müssen sich die Falzmesser 02 ins Innere des Zylinders 01 zurückziehen. Zu diesem Zweck sind die Falzmesser 02 jeweils über in der Fig. 1 vom Mantel des Zylinders 01 verdeckte Arme mit einer Welle 03 fest verbunden, die jeweils in den zwei sich gegenüberliegenden Stirnplatten 04 des Zylinders 01 schwenkbar gelagert ist. Mit den Stirnplatten 04 verbundene Achszapfen 06 sind in einem nicht dargestellten Seitengestell drehbar gelagert. Koaxial zu dem in der Fig. 1 gezeigten Achszapfen 06 sind eine Scheibe 07, z. B. Kurvenscheibe 07 und eine Scheibe 08, z. B. Deckscheibe 08 vorgesehen. Die Kurvenscheibe 07 hat im Wesentlichen die Form einer zur Drehachse des Zylinders 01 konzentrischen Kreisscheibe, in deren Umfangsfläche 09 eine Einbuchtung 11 gebildet ist. Auch die Umfangsfläche 24 der Deckscheibe 08 weist Einbuchtungen 14 auf.

Jede der drei Wellen 03 des Zylinders 01 trägt zwei Steuerhebel 16; 17, die zusammen eine Steuereinrichtung zum Steuern der Bewegung eines der Falzmesser 02 bilden. Der Übersichtlichkeit halber sind die Steuerhebel 16; 17 in Fig. 1 nur an einer der Wellen 03 dargestellt. Der erste Steuerhebel 16 trägt an seinem freien Ende eine Laufrolle 18, die auf der Umfangsfläche 09 der Kurvenscheibe 07 abrollt. In analoger Weise trägt der zweite Steuerhebel 17 eine Laufrolle 19, die auf der Umfangsfläche 24 der Deckscheibe 08 abrollt. Der zweite Steuerhebel 17 ist fest mit der Welle 03 verbunden, während der erste Steuerhebel 16 um die Welle 03 drehbar ist.

In axialer Richtung des Zylinders 01 können mehrere Laufrollen 18; 19 nebeneinander angeordnet sein.

Die zwei Steuerhebel 16; 17 tragen jeweils an der dem anderen Steuerhebel 16; 17 zugewandten seitlichen Flanke einen Vorsprung 21 bzw. 22, wie in der auseinander gezogenen Detailansicht der Steuereinrichtung der Fig. 2 zu sehen ist. Zwischen den zwei Vorsprüngen 21; 22 ist eine Druckfeder 23, die die zwei Vorsprünge 21; 22 auseinander treibt. Auf den zweiten Steuerhebel 17 wirkt über die Welle 03 ein Drehmoment einer nicht gezeigten, z. B. im Zylinder 01 untergebrachten Feder, die dessen Rolle 19 gegen die Umfangsfläche 24 der Deckscheibe 08 treibt. In der in Fig. 1 gezeigten Stellung rollt die Rolle 18 in der Einbuchtung 11 ab und die Rolle 19 in einer der Einbuchtungen 14. Wenn die Rolle 18 außerhalb der Einbuchtung 11 auf der Umfangsfläche 09 abrollt während die Rolle 19 einer Einbuchtung 14 gegenüberliegt, berührt die Rolle 19 die Deckscheibe 08 nicht, da eine Berührung zwischen den Vorsprüngen 21; 22 und die gleichzeitig außerhalb der Einbuchtung 11 auf der Umfangsfläche 09 abrollende Rolle 18 des ersten Steuerhebels 16 dies verhindern. Die Rolle 18 befindet sich während der gesamten Umdrehung des Zylinders 01 im Kontakt mit der Kurvenscheibe 07 und ist dadurch gleichmäßig drehangetrieben. Wenn die Rolle 18 jedoch in die Einbuchtung 11 eindringt, so führt dies nur dann zu einer Bewegung der Falzmesser 02, wenn gleichzeitig die Rolle 19 einer Einbuchtung 14 der Umfangsfläche 24 der Deckscheibe 08 gegenüberliegt, wie in Fig. 1 dargestellt. Ist dies nicht der Fall, so verliert die Rolle 19 den Kontakt mit der Deckscheibe 08 und verlangsamt, bis sie die Einbuchtung 14 passiert hat und erneut in Kontakt mit der Deckscheibe 08 kommt.

Fig. 3 zeigt in einer perspektivischen Ansicht analog zu Fig. 2 eine vereinfachte Steuereinrichtung, bei der ein einziger an der Welle 03 befestigter Steuerhebel 17' zwei Laufrollen 18`; 19' zum Abrollen auf der Kurvenscheibe 07 bzw. der Deckscheibe 08 trägt. Der Steuerhebel 17' schwenkt nur dann radial einwärts, wenn beide Laufrollen 18'; 19' gleichzeitig die Einbuchtung 11 bzw. die Einbuchtung 14 passieren.

Ein gleichartiger Steuermechanismus mit Kurven- und Deckscheibe 07; 08, Steuerhebeln 16; 17; 17' sowie Laufrollen 18; 19; 18'; 19' ist an der entgegengesetzten Stirnseite des Zylinders 01 zur Steuerung der nicht dargestellten Punkturleisten oder Greifer vorgesehen, mit denen auf der Mantelfläche des Zylinders 01 geladene Signaturen gehalten werden.

Ebenfalls im nicht dargestellten Seitengestell sind ein Pyrometer 12 und ein Pyrometer 13 als berührungslose Temperatursensoren 12; 13 gehaltert. Das Pyrometer 12 ist mit Blickrichtung auf die Umfangsfläche 09 der Kurvenscheibe 07 ausgerichtet, das Pyrometer 13 mit Blickrichtung auf die Umfangsfläche 24 der Deckscheibe 08. Beide Pyrometer 12; 13 stehen in Verbindung mit einem Leitstand 26, der zur Steuerung der Maschine mit dem dargestellten Zylinder 01 dient.

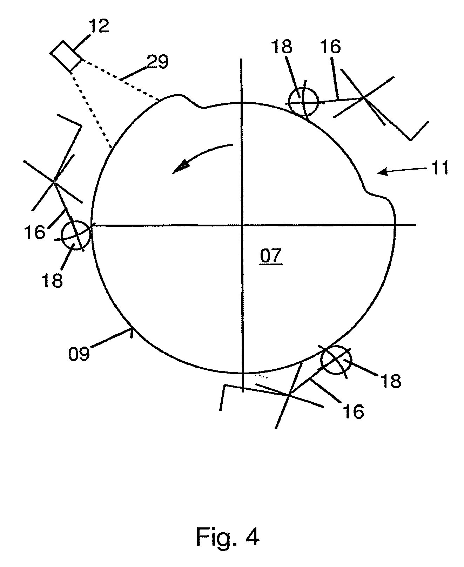

Im Folgenden soll die Funktionsweise der Temperaturüberwachung der Steuereinrichtung durch die Pyrometer 12; 13 am Beispiel der Laufrollen 18 des Steuerhebels 16, welche die Kurvenscheibe 07 abtasten, erläutert werden. Es versteht sich, dass die Temperaturüberwachung bei der Laufrolle 19 mit dem Pyrometer 13 auf entsprechende Weise geschieht. Dazu ist in Fig. 4 die Kurvenscheibe 07 mit dem Pyrometer 12 in schematischer Vorderansicht gezeigt. Da die Kurvenscheibe 07 fest im Seitengestell eingebaut ist und sich der Zylinder 01 dreht, rollen die drei Laufrollen 18 im Gegenuhrzeigersinn auf der Umfangsfläche 09 der Kurvenscheibe 07 ab. Mit jeder Umdrehung des Zylinders 01 durchquert jede der Laufrollen 18 einen in Fig. 4 gestrichelt gezeichneten Erfassungsbereich 29 des Pyrometers 12 jeweils ein Mal. Bei jeder Durchquerung des Erfassungsbereichs 29 erfasst das Pyrometer 12 die Temperatur der betreffenden Laufrolle 18. Das Pyrometer 12 gibt die erfasste Temperatur an einen Computer 27, z. B. des Leitstands 26, weiter, der als Auswerteeinheit 27 dient, und die Temperatur mit einem ihm vorgegebenen Grenzwert vergleicht. Daneben kann beispielsweise eine graphische Wiedergabe eines zeitlichen Verlaufs der Temperatur auf einem Signalgeber 28, z. B. einem Bildschirm 28 vorgesehen sein.

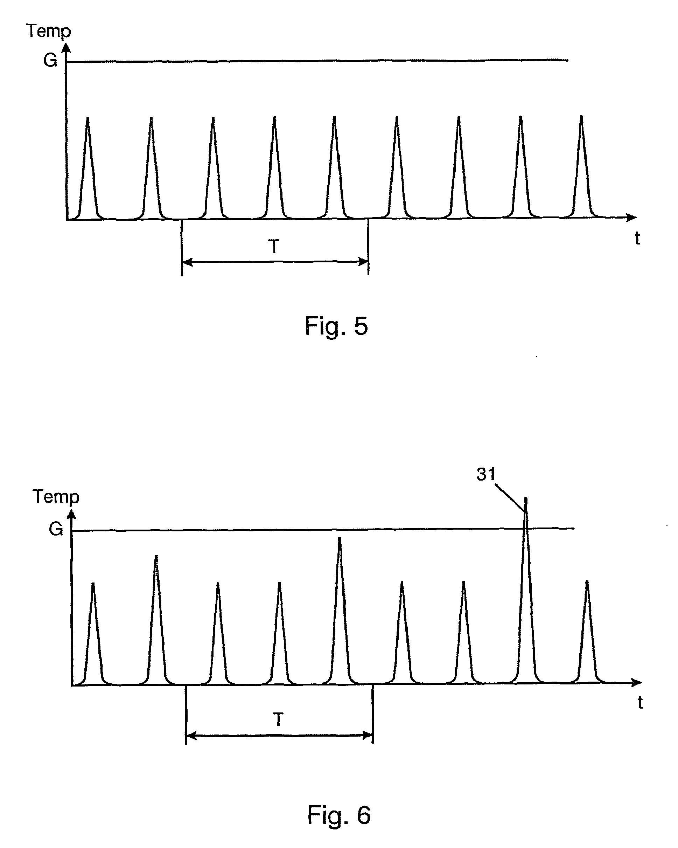

In Fig. 5 ist die vom Pyrometer 12 erfasste Temperatur Temp als Funktion der Zeit t dargestellt. T bezeichnet die Periodendauer eines Umlaufs des Zylinders 01. G ist der vorgegebene Grenzwert. Weil drei Laufrollen 18 vorhanden sind, werden vom Pyrometer 12 innerhalb der Periodendauer T drei Maxima der Temperatur Temp erfasst, die jeweils dem Durchgang einer der Laufrollen 18 durch den Erfassungsbereich 29 entsprechen und die Temperatur Temp der betreffenden Laufrolle 18 angeben. Sofern die Laufrollen 18 unbeschädigt sind, haben alle Laufrollen 18 jeweils in etwa die gleiche Temperatur Temp. Solange keines der Maxima den Grenzwert G überschreitet, sind alle Laufrollen 18 in Ordnung.

Sobald eine der Laufrollen 18 oder deren Lager beispielsweise in Folge von Verschleiß oder Materialermüdungen beschädigt wird, kommt es zu verstärkten Reibungen zwischen der Laufrolle 18 und der Kurvenscheibe 09 bzw. innerhalb des Lagers der Laufrolle 18, so dass sich die Temperatur Temp der betreffenden Laufrolle 18 im Vergleich zu den anderen Laufrollen 18 erhöht. In diesem Fall erzeugt das Pyrometer 12 das in Fig. 6 gezeigte Signal, bei dem jedes dritte, der Temperatur Temp der beschädigten Laufrolle 18 entsprechende Maximum im Vergleich zu den Maxima der intakten Laufrollen 18 erhöht ist. Weil die Temperatur Temp der beschädigten Laufrolle 18 ansteigt, wächst die zu dieser Laufrolle 18 gehörende Signalspitze mit der Zeit immer mehr an. Beispielsweise kann anhand der Winkellage des Zylinders 01 jede Laufrolle 18 identifiziert werden. Sobald die Temperatur der beschädigten Laufrolle 18 und damit die Höhe der wachsenden Signalspitze den Grenzwert G überschreitet, wie in Fig. 6 für die Signalspitze 31 der Fall ist, wird vom Computer 27 über den Signalgeber, d. h. im vorliegenden Fall auf dem Bildschirm 28, ein Warnsignal erzeugt und/oder die Maschine bzw. der Zylinder 01 wird z. B. durch einen Nothalt gestoppt.

Anstatt die einzelnen Maxima mit dem Grenzwert G zu vergleichen, kann der Computer 27 eine Störung einer Laufrolle 18 auch anhand einer spektralen Analyse des Temperatursignals des Pyrometers 12 oder 13 erkennen. Wenn n die Zahl der Laufrollen 18 in Umfangsrichtung des Zylinders 01 ist, die in jeder Umdrehungsperiode T des Zylinders 01 den Erfassungsbereich 29 passieren, dann hat die stärkste spektrale Komponente des Temperatursignals die Frequenz n/T. Wenn alle Laufrollen 18 die gleiche Temperatur Temp haben, so ist die Intensität einer spektralen Komponente mit der Frequenz 1/T vernachlässigbar. Eine solche Komponente tritt nur dann mit maßgeblicher Intensität auf, wenn die Temperatur Temp einer Laufrolle 18 von der der anderen abweicht. Eine Störung der Laufrolle 18 kann daher erkannt werden, wenn die Intensität der Komponente mit der Frequenz 1/T oder das Verhältnis dieser Intensität zu der mit der Frequenz n/T einen geeignet vorgegebenen Grenzwert G überschreitet. Dies ist auf einfache Weise feststellbar, indem mit Hilfe eines elektronischen Filters die Komponente mit der Frequenz 1/T aus dem Temperatursignal extrahiert und ihre Intensität bewertet wird, bzw. indem mit zwei Filtern die Komponenten mit den Frequenzen 1/T und n/T extrahiert und ihr Verhältnis bewertet wird. Aus der relativen Phasenlage der 1/T-Komponente zur Drehung des Zylinders 01 kann der Computer 27 überdies ermitteln, welche der mehreren Laufrollen 18 defekt ist, und dies am Bildschirm 28 anzeigen.

Anstelle der drei Falzmesser 02 oder Punkturleisten mit Punkturnadeln, Greifer oder Falzklappen kann der Zylinder 01 auch fünf oder sieben Abschnitte, d. h. fünf oder sieben Werkzeuge 02, insbesondere Falzmesser 02 oder Punkturleisten mit Punkturnadeln, Greifer oder Falzklappen aufweisen. Vorzugsweise weist der Zylinder 01 in Umfangsrichtung mindestens zwei Laufrollen 18, vorzugsweise n Laufrollen 18 auf, wobei n eine ganze Zahl, vorzugsweise 2, 3, 5 oder 7 ist.

Bei den obigen Ausführungsbeispielen wurden lediglich Falzmesser 02 als Beispiele für am Zylinder 01 angebrachte und periodisch angetriebene Werkzeuge betrachtet. Es versteht sich jedoch, dass die Erfindung in gleicher Weise wie oben beschrieben, auch auf andere periodisch bewegte Werkzeuge 02 wie Greifer, Punkturleisten mit Punkturnadeln, Falzklappen etc. anwendbar ist.

### Bezugszeichenliste

- 01: Zylinder
- 02: Werkzeug, Falzmesser
- 03: Welle
- 04: Stirnplatte
- 05: -
- 06: Achszapfen
- 07: Scheibe, Kurvenscheibe
- 08: Scheibe, Deckscheibe
- 09: Umfangsfläche
- 10: -
- 11: Einbuchtung
- 12: Temperatursensor, Pyrometer
- 13: Temperatursensor, Pyrometer
- 14: Einbuchtung
- 15: -
- 16: Steuerhebel
- 17: Steuerhebel
- 18: Laufrolle
- 19: Laufrolle
- 20: -
- 21: Vorsprung
- 22: Vorsprung
- 23: Druckfeder
- 24: Umfangsfläche
- 25: -
- 26: Leitstand
- 27: Computer, Auswerteeinheit
- 28: Signalgeber, Bildschirm
- 29: Erfassungsbereich
- 30: -
- 31: Signalspitze

- 17': Steuerhebel
- 18': Laufrolle
- 19': Laufrolle

- Temp: Temperatur

- G: Grenzwert
- T: Periodendauer (01)

- t: Zeit

## Patentansprüche

1. Maschine mit einem rotierbaren Zylinder (01) mit mindestens einem Werkzeug (02), das in der Lage ist, eine Arbeitsbewegung relativ zum Zylinder (01) auszuführen, einer an der Stirnfläche des Zylinders (01) angeordneten Scheibe (07; 08), wobei der Zylinder (01) relativ zur Scheibe (07; 08) rotierend ist, einem Steuerhebel (16; 17; 17'), der mit dem Zylinder (01) rotierbar angeordnet ist und zum Antreiben der Arbeitsbewegung an das Werkzeug (02) gekoppelt ist, einer Laufrolle (18; 19; 18'; 19'), die auf dem Steuerhebel (16; 17; 17') angeordnet ist, so dass bei Rotation des Zylinders (01) die Laufrolle (18; 19; 18'; 19') die Scheibe (07; 08) abtastet und der Steuerhebel (16; 17; 17') die Arbeitsbewegung antreibt, **dadurch gekennzeichnet, dass** die Maschine weiterhin wenigstens einen Temperatursensor (12; 13) zum Erfassen der Temperatur (Temp) der Laufrolle (18; 19; 18'; 19') aufweist.

2. Maschine nach Anspruch 1, **dadurch gekennzeichnet, dass** der Temperatursensor (12; 13) die Temperatur (Temp) berührungslos erfassend angeordnet ist.

3. Maschine nach Anspruch 1 oder 2, **dadurch gekennzeichnet, dass** der Temperatursensor (12; 13) ein Pyrometer (12; 13) ist.

4. Maschine nach Anspruch 1, **dadurch gekennzeichnet, dass** eine Auswerteeinheit (27) angeordnet ist, welche die vom Temperatursensor (12; 13) erfasste Temperatur (Temp) mit einem vorgegebenen Grenzwert (G) vergleicht und ein Warnsignal ausgibt, sobald die Temperatur (Temp) einen Grenzwert (G) überschreitet.

5. Maschine nach Anspruch 1, **dadurch gekennzeichnet, dass** der Zylinder (01) im Umfangsrichtung n Laufrollen (18; 19; 18'; 19') trägt, wobei n eine ganze Zahl ist.

6. Maschine nach Anspruch 5, **dadurch gekennzeichnet, dass** die Laufrollen (18; 19; 18'; 19') in jeder Umdrehungsperiode T des Zylinders (01) einen Erfassungsbereich (29) des Temperatursensors (12; 13) passieren, dass der Temperatursensor (12; 13) ein für die Temperatur (Temp) der Laufrollen (18; 19; 18'; 19') repräsentatives Messsignal erzeugt.

7. Maschine nach Anspruch 4, **dadurch gekennzeichnet, dass** die Auswerteeinheit (27) über wenigstens einen Signalgeber (28) ein akustisches und/oder ein optisches Warnsignal ausgibt, sobald die Temperatur (Temp) den Grenzwert (G) überschreitet.

8. Maschine nach einem der Ansprüche 4 oder 7, **dadurch gekennzeichnet, dass** ein Leitstand (26), der die Auswerteeinheit (27) bzw. die Auswerteeinheit (27) und/oder den Signalgeber (28) umfasst, angeordnet ist.

9. Maschine nach Anspruch 1, **dadurch gekennzeichnet, dass** in axialer Richtung des Zylinders (01) mindestens zwei Laufrollen (18; 19; 18'; 19') nebeneinander angeordnet sind.

10. Maschine nach Anspruch 9, **dadurch gekennzeichnet, dass** eine zweite Scheibe (08), wobei der Steuerhebel (17') auch die zweite Laufrolle (19') zum Abtasten der zweiten Scheibe (08) trägt, angeordnet ist.

11. Maschine nach Anspruch 1, **dadurch gekennzeichnet, dass** ein zweiter Steuerhebel (17) mit einer zweiten Laufrolle (19), die eine zweite Scheibe (08) abtastend angeordnet ist, wobei der Steuerhebel (16) und der zweite Steuerhebel (17) um eine gemeinsame Achse schwenkbar sind, angeordnet ist.

12. Maschine nach Anspruch 9 oder 10, **dadurch gekennzeichnet, dass** wenigstens zwei Temperatursensoren (12; 13) angeordnet sind, wobei ein erster der Temperatursensoren (12) die Temperatur der Laufrolle (18; 18') erfasst und ein zweiter der Temperatursensoren (13) die Temperatur (Temp) der zweiten Laufrolle (19; 19') erfasst.

13. Verfahren zur Temperaturüberwachung bei einer Maschine nach Anspruch 5, **dadurch gekennzeichnet, dass** aufgrund des Messsignals des Temperatursensors (12; 13) ermittelt wird, welche der n Laufrollen (18; 19; 18'; 19') defekt ist.

14. Verfahren zur Temperaturüberwachung bei einer Maschine nach Anspruch 5, **dadurch gekennzeichnet, dass** in Abhängigkeit von einer Winkellage in Umfangsrichtung des Zylinders (01) ermittelt wird, welche der n Laufrollen (18; 19; 18'; 19') defekt ist.

15. Verfahren zur Temperaturüberwachung bei einer Maschine nach Anspruch 4, **dadurch gekennzeichnet, dass** aufgrund eines Signals der Auswerteeinheit (27) der Zylinder (01) stoppt.

16. Maschine nach Anspruch 5, **dadurch gekennzeichnet, dass** n eine ganze Zahl gleich oder größer 2 ist.

17. Maschine nach Anspruch 5 oder 16, **dadurch gekennzeichnet, dass** n gleich 3, 5 oder 7 ist.

18. Maschine nach Anspruch 1, 10 oder 11, **dadurch gekennzeichnet, dass** das Werkzeug (02) ein Falzmesser (02) oder eine Punkturleiste oder ein Greifer oder eine Falzklappe ist.

19. Maschine nach Anspruch 1, **dadurch gekennzeichnet, dass** die Maschine ein Falzapparat ist.

20. Maschine nach Anspruch 1, **dadurch gekennzeichnet, dass** die Maschine eine Bogendruckmaschine ist.

## Claims

1. A machine with a rotatable cylinder (01) with at least one tool (02) which is capable of performing an operating movement relative to the cylinder (01), a disc (07; 08) arranged on the end face of the cylinder (01), the cylinder (01) being rotating relative to the disc (07; 08), a control lever (16; 17; 17') which is arranged rotatably with the cylinder (01) and is coupled to the tool (02) for driving the operating movement, a roller (18; 19; 18'; 19') which is arranged on the control lever (16; 17; 17') so that upon rotation of the cylinder (01) the roller (18; 19; 18'; 19') sweeps the disc (07; 08) and the control lever (16; 17; 17') drives the operating movement, **characterised in that** the machine furthermore has at least one temperature sensor (12; 13) for detecting the temperature (Temp) of the roller (18; 19; 18'; 19').

2. A machine according to Claim 1, **characterised in that** the temperature sensor (12; 13) is arranged to detect the temperature (Temp) in contact-free manner.

3. A machine according to Claim 1 or 2, **characterised in that** the temperature sensor (12; 13) is a pyrometer (12; 13).

4. A machine according to Claim 1, **characterised in that** an evaluation unit (27) is arranged which compares the temperature (Temp) detected by the temperature sensor (12; 13) with a preset limit value (G) and emits a warning signal as soon as the temperature (Temp) exceeds a limit value (G).

5. A machine according to Claim 1, **characterised in that** the cylinder (01) in the peripheral direction bears n rollers (18; 19; 18'; 19'), n being an integer.

6. A machine according to Claim 5, **characterised in that** the rollers (18; 19; 18'; 19') in each period of revolution T of the cylinder (01) pass through a detection region (29) of the temperature sensor (12; 13), that the temperature sensor (12; 13) generates a measuring signal representative of the temperature (Temp) of the rollers (18; 19; 18'; 19').

7. A machine according to Claim 4, **characterised in that** the evaluation unit (27) emits an acoustic and/or a visual warning signal via at least one signal generator (28) as soon as the temperature (Temp) exceeds the limit value (G).

8. A machine according to one of Claims 4 or 7, **characterised in that** a control station (26) is arranged which comprises the evaluation unit (27) or the evaluation unit (27) and/or the signal generator (28).

9. A machine according to Claim 1, **characterised in that** at least two rollers (18; 19; 18'; 19') are arranged next to one another in the axial direction of the cylinder (01).

10. A machine according to Claim 9, **characterised in that** a second disc (08) is arranged, the control lever (17') also bearing the second roller (19') for sweeping the second disc (08).

11. A machine according to Claim 1, **characterised in that** a second control lever (17) with a second roller (19), which is arranged to sweep a second disc (08), is arranged, the control lever (16) and the second control lever (17) being pivotable about a common axis.

12. A machine according to Claim 9 or 10, **characterised in that** at least two temperature sensors (12; 13) are arranged, a first one of the temperature sensors (12) detecting the temperature of the roller (18; 18') and a second one of the temperature sensors (13) detecting the temperature (Temp) of the second roller (19; 19').

13. A method for monitoring temperature in a machine according to Claim 5, **characterised in that** which of the n rollers (18; 19; 18'; 19') is defective is determined on the basis of the measuring signal of the temperature sensor (12; 13).

14. A method for monitoring temperature in a machine according to Claim 5, **characterised in that** which of the n rollers (18; 19; 18'; 19') is defective is determined dependent on an angular position in the peripheral direction of the cylinder (01).

15. A method for monitoring temperature in a machine according to Claim 4, **characterised in that** the cylinder (01) stops on the basis of a signal from the evaluation unit (27).

16. A machine according to Claim 5, **characterised in that** n is an integer equal to or greater than 2.

17. A machine according to Claim 5 or 16, **characterised in that** n is equal to 3, 5 or 7.

18. A machine according to Claim 1, 10 or 11, **characterised in that** the tool (02) is a folding blade (02) or a pin strip or a gripper or a folding jaw.

19. A machine according to Claim 1, **characterised in that** the machine is a folder.

20. A machine according to Claim 1, **characterised in that** the machine is a sheet-fed printing press.

## Revendications

1. Machine, avec un cylindre (01) susceptible de tourner, comprenant au moins un outil (02), en mesure d'effectuer un déplacement de travail par rapport au cylindre (01), un disque (07 ; 08) disposé sur la face frontale du cylindre (01), le cylindre (01) étant en rotation par rapport au disque (07 ; 08), un levier de commande (16 ; 17 ; 17'), disposé de façon à pouvoir tourner avec le cylindre (01) et couplé à l'outil (02) pour l'entraînement du déplacement de travail, un galet de roulement (18 ; 19 ; 18' ; 19'), disposé sur le levier de commande (16 ; 17 ; 17'), de manière que, lors de la rotation du cylindre (10), le galet de roulement (18 ; 19 ; 18' ; 19') palpe le disque (07 ; 08) et le levier de commande (16 ; 17 ; 17') entraîne le déplacement de travail, **caractérisée en ce que** la machine présente en plus au moins un capteur de température (12 ; 13), pour détecter la température (Temp) du galet de roulement (18 ; 19 ; 18' ; 19').

2. Machine selon la revendication 1, **caractérisée en ce que** le capteur de température (12 ; 13) est disposé pour détecter la température (Temp) sans qu'il y ait contact.

3. Machine selon la revendication 1 ou 2, **caractérisée en ce que** le capteur de température (12 ; 13) est un pyromètre (12 ; 13).

4. Machine selon la revendication 1, **caractérisée en ce qu'**est disposée une unité d'évaluation, qui compare la température (Temp), appréhendée par le capteur de température (12 ; 13), à une valeur limite (G) prédéterminée et émet un signal d'avertissement, dès que la température (Temp) dépasse une valeur limite (G).

5. Machine selon la revendication 1, **caractérisée en ce que** le cylindre (01) porte dans la direction périphérique n galets de roulement (18 ; 19 ; 18' ; 19'), n étant un nombre entier.

6. Machine selon la revendication 5, **caractérisée en ce que**, à chaque période d'un tour de rotation (T) du cylindre (01), les galets de roulement (18 ; 19 ; 18' ; 19') passent à une zone de détection (29) du capteur de température (12 ; 13), **en ce que** le capteur de température (12 ; 13) produit un signal de mesure, représentatif de la température (Temp) des galets de roulement (18 ; 19 ; 18' ; 19').

7. Machine selon la revendication 4, **caractérisée en ce que** l'unité d'évaluation (27), par l'intermédiaire d'au moins un générateur de signal (28), émet un signal d'avertissement acoustique et/ou un signal d'avertissement optique, dès que la température (Temp) dépasse une valeur limite (G).

8. Machine selon l'une des revendications 4 ou 7, **caractérisée en ce qu'**est disposé un pupitre de commande (26), comprenant l'unité d'évaluation (27), respectivement l'unité d'évaluation (27) et/ou le générateur de signal (28).

9. Machine selon la revendication 1, **caractérisée en ce qu'**au moins deux galets de roulement (18 ; 19 ; 18' ; 19') sont disposés l'un à côté de l'autre dans la direction axiale du cylindre (01).

10. Machine selon la revendication 9, **caractérisée en ce qu'**est disposé un deuxième disque (08), le levier de commande (17') portant également le deuxième galet de roulement (19') devant palper le deuxième disque (08).

11. Machine selon la revendication 1, **caractérisée en ce qu'**est disposé un deuxième levier de commande (17), avec un deuxième galet de roulement (19) devant palper un deuxième disque (08), le levier de commande (16) et le deuxième levier de commande (17) étant susceptibles de pivoter autour d'un axe commun.

12. Machine selon la revendication 9 ou 10, **caractérisée en ce que** sont disposés au moins deux capteurs de température (12 ; 13), sachant qu'un premier (12) des capteurs de température appréhende la température du galet de roulement (18 ; 18'), et qu'un deuxième (13) des capteurs de température appréhende la température (Temp) du deuxième galet de roulement (19 ; 19').

13. Procédé de surveillance de la température, pour une machine selon la revendication 5, **caractérisé en ce que**, en se basant sur le signal de mesure du capteur de température (12 ; 13), on détermine celui des n galets de roulement (18 ; 19 ; 18' ; 19') qui est défectueux.

14. Procédé de surveillance de la température, pour une machine selon la revendication 5, **caractérisé en ce que**, en fonction d'une position angulaire dans la direction périphérique du cylindre (01), on détermine celui des n galets de roulement (18 ; 19 ; 18' ; 19') qui est défectueux.

15. Procédé de surveillance de la température, pour une machine selon la revendication 4, **caractérisé en ce que** le cylindre (01) est stoppé d'après un signal de l'unité d'évaluation (27) du cylindre (01).

16. Machine selon la revendication 5, **caractérisée en ce que** n est un nombre entier, égal ou supérieur à 2.

17. Machine selon la revendication 5 ou 16, **caractérisée en ce que** n est égal à 3, 5 ou 7.

18. Machine selon la revendication 1, 10 ou 11, **caractérisée en ce que** l'outil (02) est une lame de pliage (02), ou une bande de pointure, ou un preneur, ou un volet de pliage.

19. Machine selon la revendication 1, **caractérisée en ce que** la machine est un appareil de pliage.

20. Machine selon la revendication 1, **caractérisée en ce que** la machine est une machine à imprimer les feuilles.
